# EUROPEAN PATENT APPLICATION

(11) **EP 1 342 739 A1**
(43) Date of publication of application: **10.09.2003**
(21) Application number: 03290514.3
(22) Date of filing: 04.03.2003
(51) Int. Cl.: C08F 283/01, C08F 299/04, C08G 63/91, C08K 5/00

(54) **Alkanolamine-based promoter systems for curing of unsaturated polyester resin compositions**

(30) Priority: 27.01.2003 US 353153; 06.03.2002 US 362019 P
(71) Applicant: Atofina Chemicals, Inc., Philadelphia, PA 19103-3222 (US)
(72) Inventor: Lou, Jianfeng, Wayne, Pennsylvania 19087 (US)
(74) Representative: Granet, Pierre

(57) **Abstract**

Disclosed is an improved promoter system for curing resin compositions based on unsaturated polyesters. The promoter system contains at least one primary promoter which is a metallic compound, such as a cobalt salt, and at least one co-promoter which is an alkyl alkanolamine. Such an alkyl alkanolamine is usually an amino (C₂-C₄) alcohol, and it is present at 1-15 mole of amine per mole of equivalent cobalt metal. The use of alkyl alkanolamine reduces the level of the cobalt promoter in curing formulations with no deleterious effects on the curing performance, which leads to reduced color formation in finished products.

## Description

### Field of the Invention

The invention relates to a promoter system targeted for application in curing resin compositions based on unsaturated polyesters. The promoter system contains at least a metallic compound such as a cobalt salt as primary promoter and at least an alkyl alkanolamine as co-promoter.

### Description of the Prior Art

In the unsaturated polyester resin (UPE) industry, end users make a variety of finished products by curing various compositions based on UPE. Such finished products include gel coat and solid surface and can have the appearance of marble, onyx, or granite. UPE end users set performance targets for curing compositions that contain UPE, unsaturated monomer, promoter and stabilizer. The performance criteria often include curing rate, viscosity, and nonvolatile material level, of which the curing performance is critical and is often measured by gel time, start-to-peak time and peak exotherm. The curing processes are usually initiated at room temperature by peroxides, typically, methyl ethyl ketone peroxide (MEKP).

Such curing systems are disclosed in the following patents.

Hans, R.; Schneider, J.; Patheiger, M.; Niehaus, C.; US Patent # 3,574, 787, **1971** (Bayer): Acetoacetic acid esters are claimed as additional accelerators for curing polyester molding and coating compositions. Such esters are mixed with a cobalt salt to accelerate hardening of unsaturated polyester-based compositions at room temperature upon addition of hydroperoxide as polymerization catalyst.

Uffner, M. W.; US Patent # 3,804,799,**1974** (Air Products): The patent discloses the use of metal-amine complexes as accelerator for curing of unsaturated polyester resins. Specifically, the patent claims complexes formed between salts of cobalt (and/or zinc and nickel) and triethylene diamine compounds as accelerator for free-radical initiated cuing of unsaturated polyester compositions.

Uffner, M. W.; US Patent #3,886,113,**1975** (Air Products): The patent discloses the use of metal-amine complexes formed of triethylene diamine with cobalt and manganese to accelerate free-radical initiated curing of unsaturated polyester resins.

Coats, C. E.; Watts, G. F.; US Patent # 3,950,287 **1976** (Ashland Oil): The patent describes a method of curing polymerizable water-in-oil emulsions with a mixture based on N-hydroxyalkyl substituted, phenyl-substituted tertiary amine compounds, oil-soluble cobalt salts, and peroxy free radical catalysts. Specifically, the patent discloses the use of a combination of alkanolamine and aniline to accelerate the curing rate. The preferred tertiary amines are phenyl diethanolamine, phenyl ethyl ethanolamine, m-tolyl diethanolamine, and dimethyl aniline.

Thornburrow, P. R.; US Patent # 4,046,740, **1977** (BP Chemicals): The patent describes the use of anilines as accelerator for unsaturated polyester resin compositions. Examples of such anilines include N,N-dimethyl-2,4,6-trimethyl aniline, N,N-diethyl-2,4,6-trimethyl aniline, N,N-di(hydroxyethyl)-2,4,6-trimethyl aniline, and N,N-di(hydroxypropyl)-2,4,6-trimethyl aniline.

Jefferson, D. E.; Coe, C. G.; Beitchman, B. D.; Uffner, M. W.; US Patent # 4,309,511, **1982** (Air Products): The invention discloses a three-component promoter for accelerating the low-temperature curing of unsaturated polyester resins while substantially prolonging the shelf life of the pre-promoted compositions. Such a ternary system include a cobalt salt, a copper salt and an amine. The preferred amines mentioned in the invention are tertiary alkyl amino acrylates or methacrylates, lower alkyl and alkanol amines, and heterocyclic amines. Among alkanol amines, monoethanolamine, triethanolamine, propanolamine and butanolamine are disclosed. The most preferred amine in the proposed ternary promoter system is triethylenediamine, a heterocyclic amine.

Howell, H.; US Patent #4,325,841,**1982** (Koppers): The patent discloses the use of an amine salt to reduce gel-time drift in cobalt-prepromoted polyester resin systems. Such an amine salt is made by reacting a tertiary aromatic amine, preferably diethylaniline, with an aromatic dicarboxylic acid, preferably phthalic acid.

Caramaschi, G. A.; Sanchioni, S.; Bocci, M.; Leonardi, M.; EP Patent # 0,457,276 B1, 1991 (Lonza S.P.A.): The patent describes the use of self-accelerating crosslinking agents such as acetoacetoxyalkyl (meth)acrylates in unsaturated ester resin formulations.

Giovando, G.; US Patent # 5,235,010 **1993** (Akzo N.V. & Saint Peter S.r.l.): The patent discloses the use of organic oxygen-containing compounds as co-catalyst to enhance the accelerating effect of metal salts in curing unsaturated maleic, allylic, vinylic and epoxy-type polyester resins. The oxygen-containing compounds include methyl acetoacetate, ethyl acetoacetate, benzoyl acetone and benzyl alcohol.

Ridland, J.; US Patent # 5,688,894, **1997** (Tioxide Specialties): The patent describes a method of using an alkanolamine derivative of titanium or zirconium to cure powder coating resins that are carboxyl- or hydroxyl-rich. The derivative is made by reacting a trialkanolamine and a dialkanolamine (or a monoalkanolamine) with an orthoester or a condensed orthoester of titanium or zirconium. The preferred alkanolamines used for such preparation are ethanolamines and isopropanolamines.

Matsunaga, S.; Shiiki, S.; EP Patent # 1,057,857 A2, **2000** (Dainippon Ink & Chemicals): The patent discloses a curing accelerator used in coating or printing ink formulations. The curing accelerator contains a cobalt soap, a manganese soap, and an amino alcohol. Amino alcohols disclosed in the invention include diethanolamine, diethyl ethanolamine, dibutyl ethanolamine, and n-butyl diethanolamine.

These references disclose the use of organic compounds in combination with metal salts in curing formulations based on unsaturated polyester resins. The metal salts are based on one or more salts of cobalt, copper, zinc, nickel, manganese, vanadium, lithium, magnesium and iron; they are used to facilitate the de-association of peroxide catalysts into free radicals. The organic compounds are used to enhance the accelerating effects of metal salts, and they are commonly referred to as co-promoter or co-accelerator. Among such organic co-promoters, amines are most commonly used. Amine co-promoters disclosed in the prior art include triethylene diamine compounds, aniline and its derivatives, and alkanolamines.

The disclosure of alkanolamines as co-promoter focuses on coating and printing ink applications. In these applications, either the alkanolamines are used in combination with certain metallic compounds or their functional moieties are incorporated into the structure of organometallic promoters. For UPE resins formulated for cold cure, cobalt soaps and amines are often used in the formulation to facilitate the breakdown of peroxide catalyst. Such promoters are controlled at a level that allows sufficient time to form the cured product but maintains a prespecified curing rate to ensure productivity. With the current curing technology, the level of cobalt used in the formulation is often high in order to meet the curing performance specified by end users, imparting an unwanted pink to red color to the finished products which raises a concern with UPE end users.

The objective of this invention is to develop a novel curing technology that reduces unwanted color formation in finished UPE products without presenting deleterious effects on the curing process.

### SUMMARY OF INVENTION

An improved promoter system for curing resin compositions based on unsaturated polyesters has been developed. The promoter system contains at least one primary promoter which is a metallic compound, such as a cobalt salt, and at least one co-promoter which is an alkyl alkanolamine. Such an alkyl alkanolamine is usually an amino (C₂-C₄) alcohol, and it is present at 1-15 mole of amine per mole of equivalent cobalt metal. The use of alkyl alkanolamine reduces the level of the cobalt promoter in curing formulations with no deleterious effects on the curing performance, which leads to reduced color formation in finished products.

### DETAILED DESCRIPTION OF THE INVENTION

In the present invention, a promoter system is disclosed that is based on cobalt soap and alkyl alkanolamine and is targeted for application in curing compositions based on unsaturated polyesters. The proposed combination of cobalt and alkanolamine gives, at the same levels of cobalt promoter and peroxide catalyst, much faster curing rate and shortened gel time than do previous cobalt-based promoter systems.

In this invention, alkyl alkanolamines are used which act synergistically with metal soaps to accelerate the curing process. In a promoter system based on the invention, alkyl alkanolamines are used together with a cobalt soap and optionally at least a second metallic co-promoter. The alkanolamine-based promoter system leads to faster gel and cure rates than do conventional promoters.

An advantage of the present invention is that the level of cobalt could be reduced without any deleterious effect on the cure rate that is specified by UPE end-users. The reduction of cobalt level translates into a dramatic reduction in the color of the cured resin products, addressing a big concern with UPE end-users.

Preferably, the promoter system contains an organocobalt compound as primary promoter, at least a second metallic compound as co-promoter, and at least an alkyl alkanolamine as co-promoter.

Such a promoter system is incorporated into a UPE base resin that contains at least a UPE resin and at least an unsaturated monomer to produce a finished UPE resin. The finished resin formulation, with additional additives and fillers depending on target application, is cured by adding to the final formulation an organic peroxide catalyst, typically MEKP, to prepare an end product.

One or more cobalt salts could be used as primary promoter. Organocobalt compounds containing 6-35% metal are usually used as primary promoter, such cobalt soaps include cobalt naphthenate, cobalt octanoate and other cobalt salts of mono- or di-carboxylic acids. It is preferred that the amount of cobalt be 0.0005-0.02 parts of cobalt metal per 100 parts of UPE base resin (UPE resin and unsaturated monomer). Inorganic cobalt salts such as cobalt halides may also be used as primary promoter.

The metallic co-promoter is normally a copper salt, and it is present at a level of 1x10⁻⁵-0.01 parts of copper metal per 100 parts of UPE base resin. However, the metallic co-promoter is not limited to a copper salt, other salts based on manganese, potassium, sodium, vanadium and lithium may be used and various metallic compounds may be combined as co-promoter.

The alkyl alkanolamine co-promoter is preferably an alkyl amino (C₂-C₄) alcohol, and is present at 1-15 mole of amine per mole of cobalt metal. In preferred cases, various promoter components are premixed in a solvent such as toluene, and the whole promoter system is incorporated into UPE base resin as a solution.

Alkyl alkanolamines used in the present invention have the following general formula: 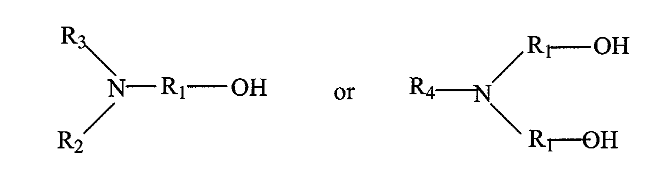 wherein
R₁ is an C1-8 alkyl group, branched or straight;
R₂ and R₃ are the same or different, and can be hydrogen or a C1-8 alkyl groups, either cyclic, straight or branched, but they may not both be hydrogen; and
R₄ is an C1-10 alkyl group.

In a curing formulation, one or more of these alkyl alkanolamines could be used. These alkanolamines could be introduced to the formulation separately, or they could be premixed prior to their addition. They may also be premixed with other promoter components. Organic solvents such as toluene and unsaturated monomers such as styrene could be used to deliver the promoter components.

UPE resins could vary in chemical constituent and molecular weight; they may be modified by reactive hydrocarbon such as dicyclopentadiene (DCPD). The UPE resins may also be copolymers or polymer blends based on UPE and acrylic polymer. Styrene and acrylate monomers are commonly used in the curing formulation, but other monomers such as vinyl toluene and □-methyl styrene may also be employed.

In general, the disclosed promoter system could be used to manufacture many UPE-based products such as marble, onyx, granite, solid surface, gel coat and laminate.

In the curing formulation, many types of additives and fillers are used depending on target product applications.

The organic peroxide catalyst is not limited to MEKP. Generally, the promoter system disclosed in this invention applies to ketone peroxides and peresters. In practice, MEKP is often blended with other catalysts such as 2,4-pentanedione peroxide (2,4-P) and cumene hydroperoxide (CHP).

### EXAMPLES

The following examples involve curing of UPE-based formulations where various alkyl alkanolamines are evaluated as organic co-promoter. The experiments were performed with 100 gram mass in a 100 ml plastic beaker. The UPE resins used in these experiments were obtained from Cook Composite Polymers; these resins were dissolved in styrene, and they are commercial products under the trademark of STYPOL®.

The curing process was catalyzed by MEKP, a product of ATOFINA Chemicals, Inc. under the trademark of LUPEROX DDM-9. During the curing experiments, cup gel time, cure time, and peak exotherm were measured. Gel time is defined as the time from the addition of MEKP until physical gel is observed; cure time is defined as the time from the addition of MEKP until the peak exotherm is produced.

### Example 1

The curing formulations were targeted for production of synthetic marble products and were prepared based on components listed in Table 1. All parts are parts by weight unless as otherwise specified. The ratio of amine to cobalt used in Table 1 was optimized for each organic co-promoter. The level of cobalt for Runs A, B and C was adjusted so that the curing rate observed in these runs was close to that in the prior art run.

The results in Table 1 indicated that the use of dimethylamino-2-propanol (DMA-2-P),2-amino-2-methyl-1-propanol (AMP) and ethylaminoethanol (EAE) led to a reduction in the cobalt level with no deterioration in curing performance. The cobalt reduction with DMA-2-P, AMP and EAE was 12%, 30% and 36%, respectively, where ARQUAD® 2C-75, a product of Akzo Nobel based on quaternary ammonium compounds, was used as reference. With the reduced level of cobalt, DMA-2-P, AMP and EAE provided better color in cured product than did ARQUAD® 2C-75.

**TABLE 1**

| | ***Prior Art*** | ***Run A*** | ***Run B*** | ***Run C*** |
|---|---|---|---|---|
| **STYPOL base resin 040-0805 (29 wt.% styrene), gram** | 100 | 100 | 100 | 100 |
| **Cobalt 2-ethylhexanoate (12 wt.% cobalt metal), gram** | 0.113 | 0.099 | 0.079 | 0.072 |
| **Mixture of copper carboxylates (8 wt.% copper metal), gram** | 0.0025 | 0.0024 | 0.0024 | 0.0024 |
| **LUPEROX DDM-9 (32-34 wt.% MEKP), gram** | 1.52 | 1.51 | 1.52 | 1.52 |
| **ARQUAD® 2C-75 (70-80 wt.% ammonium compounds), gram** | 0.072 | -- | -- | -- |
| **Dimethyl amino-2-Propanol (DMA- 2-P, 99 wt.%), gram** | -- | 0.126 | -- | -- |
| **2-Amino-2-methyl-1-propanol (AMP, 95 wt.%), gram** | -- | -- | 0.117 | -- |
| **Ethyl aminoethanol (EAE, 98 wt.%), gram** | -- | -- | -- | 0.159 |
| **Amine-to-cobalt molar ratio** | NA ^{*a*} | 6:1 | 8:1 | 12:1 |
| **Gel time** | 14'10" | 14'33" | 13'44" | 13'59" |
| **Cure time** | 27'9" | 25'22" | 24'34" | 24'45" |
| **Peak exotherm, °F** | 280.3 | 288.7 | 294.6 | 288.4 |
| **Cobalt reduction with the prior art run as reference, %** | -- | 12 | 30 | 36 |
| **Color of cured product** | Reddish purple | Reddish pink | Dark orange | Orange |

| | | | | |
|---|---|---|---|---|
| ^{*a*} Not available as ARQUAD® is a mixture based on di-cocoalkyl-dimethyl-ammonium chlorides. | | | | |

### Example 2

The curing formulations were targeted for production of gel coats and were prepared based on components listed in Table 2. All parts are parts by weight unless as otherwise specified. In a typical gel coat formulation, many additives such as rheology modifier, light stabilizer and air release agent are used. Such ingredients, however, were not included in Table 2 as they are not expected to significantly affect the catalyst activity. The ratio of amine to cobalt used in Table 2 was optimized for both ARQUAD® 2C-75 and di-isopropyl aminoethanol (DiPAE). The level of cobalt was adjusted for Run D so that its curing rate was close to that of the prior art run.

The results in Table 2 indicated that the use of DiPAE led to a dramatic reduction in the cobalt level with no deterioration in curing performance. The cobalt reduction with DiPAE was 62% with ARQUAD® 2C-75 as reference. With the reduced level of cobalt, DiPAE provided better color in cured product than did ARQUAD® 2C-75.

**TABLE 2**

| | ***Prior Art*** | ***Run D*** |
|---|---|---|
| **STYPOL base resin 040-4911 (35 wt.% styrene), gram** | 76 | 76 |
| **Cobalt 2-ethylhexanoate (12 wt.% cobalt metal), gram** | 0.042 | 0.016 |
| **Mixture of copper carboxylates (8 wt.% copper metal), gram** | 0.0039 | 0.0041 |
| **Dimethyl acetoacetamide (80% solution in water), gram** | 0.26 | 0.26 |
| **Styrene, gram** | 12.57 | 12.57 |
| **Methyl methacrylate, gram** | 9.95 | 9.95 |
| **LUPEROX DDM-9 (32-34 wt.% MEKP), gram** | **2.0** | **2.0** |
| **ARQUAD® 2C-75 (70-80 wt.% ammonium compounds), gram** | 0.037 | -- |
| **Di-isopropyl aminoethanol (DiPAE, 99 wt.%), gram** | -- | 0.035 |
| **Amine-to-cobalt molar ratio** | NA ^{*a*} | 8:1 |
| **Gel time** | 11'55" | 10'9" |
| **Cure time** | 21'12" | 20'23" |
| **Peak exotherm, °F** | 403.7 | 405.7 |
| **Cobalt reduction with the prior art run as reference, %** | -- | 62 |
| **Color of cured product** | Dark brownish orange | Brownish orange |

| | | |
|---|---|---|
| ^{*a*} Not available as ARQUAD® is a mixture based on di-cocoalkyl-dimethyl-ammonium chlorides. | | |

## Claims

1. A promoter system for curing resin compositions based on unsaturated polyesters, the promoter system comprises at least one primary promoter which is a metallic compound, and at least one co-promoter which is an alkyl alkanolamine.

2. A promoter system of Claim 1, wherein at least one primary promoter is a cobalt salt.

3. The promoter system of Claim 2, wherein the alkylolamine co-promoter has the general formula: 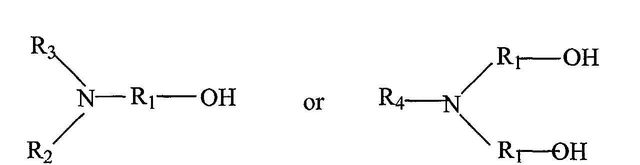 wherein
- R₁ is an C1-8 alkyl group;
- R₂ and R₃ are the same or different, and are hydrogen or
- C1-8 alkyl groups, either cyclic, straight or branched, with the proviso that both cannot be hydrogen, and
- R₄ is a C1-10 alkyl group.

4. The promoter system of Claim 2, wherein the alkyl alkanolamine co-promoter is an amino (C₂-C₄) alcohol.

5. The promoter system of claim 2, wherein the alkyl alkanolamine is present at 1-15 mole of amine per mole of equivalent cobalt metal.

6. A promoter system for curing resin compositions based on unsaturated polyesters, the promoter system comprises at least one primary promoter which is an organo-cobalt compound, at least a second metallic compound as a co-promoter, and at least one co-promoter which is an amino (C₂-C₄) alcohol.

7. The composition of Claim 6, wherein the organo-cobalt compound containing 6-35% metal.

8. The composition of Claim 7, wherein the organo-cobalt is cobalt naphthenate, cobalt octanoate or another cobalt salt of a mono- or di-carboxylic acids.

9. The composition of Claim 6, wherein the cobalt compound is present in sufficient quantity as to provide 0.0005-0.02 parts of cobalt metal per 100 parts of UPE base resin.

10. The composition of Claim 6, wherein the metallic co-promoter is a copper salt, and is present at a level of 1x10⁻⁵-0.01 parts of copper metal per 100 parts of UPE base resin.

11. The composition of Claim 6, wherein the alkyl alkanolamine co-promoter is an alkyl amino (C₂-C₄) alcohol, and is present at 1-15 mole of amine per mole of cobalt metal.

12. A promoter system for curing resin compositions based on unsaturated polyesters, the promoter system comprising at
(a) least one primary promoter which is cobalt naphthenate, cobalt octanoate or another cobalt salt of a mono- or di-carboxylic acids, and is present in sufficient quantity as to provide 0.0005-0.02 parts of cobalt metal per 100 parts of the unsaturated polyesters,
(b) optionally, at least a second metallic compound as a co-promoter, which is copper salt present at a level of
1x10⁻⁵-0.01 parts of copper metal per 100 parts of the unsaturated polyesters;
(c) at least one co-promoter which is an amino (C₂-C₄) alcohol present at 1-15 mole of amine per mole of cobalt metal.
